# EUROPÄISCHE PATENTSCHRIFT

(11) **EP 3 271 521 B1**
(45) Veröffentlichungstag und Bekanntmachung des Hinweises auf die Patenterteilung: **31.07.2019**
(21) Anmeldenummer: 16716160.3
(22) Anmeldetag: 15.03.2016
(51) Int. Cl.: E04B 1/76, E04B 1/74, D04H 1/425, D04H 1/68

(54) **VERFAHREN ZUR HERSTELLUNG EINES DÄMMSTOFFES**
METHOD FOR PRODUCING AN INSULATING MATERIAL
PROCÉDÉ POUR PRODUIRE UN MATÉRIAU ISOLANT

(30) Priorität: 17.03.2015 DE 102015003373
(43) Veröffentlichungstag der Anmeldung: 24.01.2018
(73) Patentinhaber: Rheinische Friedrich-Wilhelms-Universität Bonn, 53113 Bonn (DE); Petry, Michael, 53340 Meckenheim (DE)
(72) Erfinder: PETRY, Michael, 53340 Meckenheim (DE); PUDE, Ralf, 53359 Rheinbach (DE)
(74) Vertreter: Cohausz Hannig Borkowski Wißgott
(86) Internationale Anmeldenummer: PCT/EP2016/000465
(87) Internationale Veröffentlichungsnummer: WO 2016/146258

(56) Entgegenhaltungen:
- WO-A1-2015/033029
- WO-A2-2012/168563
- AU-A1- 2012 201 315
- DE-A1- 19 817 541
- GB-A- 2 469 181

## Beschreibung

Die Erfindung betrifft ein Verfahren zur Herstellung eines Dämmstoffes, bei dem ein natürliche Hohlräume umfassendes pflanzliches Ausgangsmaterial mit einem Hydrophobierungsmittel behandelt wird, hiernach das behandelte Ausgangsmaterial trocknet und das getrocknete hydrophobierte Ausgangsmaterial mit einem wässrigen Bindemittel gebunden wird, wobei das Bindemittel vorder Vermischung mit dem hydrophobierten, getrockneten Ausgangsmaterial oder aber die aus Bindemittel und hydrophobiertem Ausgangsmaterial vermischte Gesamtmasse durch Unterhebung eines gasförmigen Fluids zu einem Schaum gerührt/geschlagen wird und/oder zur Bildung eines Schaumes dem Bindemittel vor der Vermischung mit dem hydrophobierten, getrockneten Ausgangsmaterial oder aber der vermischten Gesamtmasse ein Porenbildner zugefügt wird, insbesondere ein Gasblasen bildender Zusatz zugefügt wird.

Dämmstoffe sind im Stand der Technik in vielfältiger Ausführung bekannt und werden beispielsweise und bevorzugt eingesetzt, um Gebäude gegen Wärme- und/oder Kälteverlust zu isolieren. Ebenso werden Dämmstoffe zur Schallisolierung eingesetzt.

Zum Einsatz kommen häufig künstlich hergestellte Dämmstoffe, wie beispielsweise auf der Basis von Polystyrol oder auch Polyurethan, was ökologisch bedenklich ist und ein zukünftiges Entsorgungsproblem schafft.

Ebenso kommen Dämmstoffe auf der Basis natürlicher Materialien zum Einsatz, wie zum Beispiel Mineralwolle, Holzwolle oder Holzfasern, Perlite oder auch geblähtes Glas oder geblähter Ton.

Nachteilig bei all diesen Dämmstoffen ist es, dass bei künstlichen Dämmstoffen und selbst bei denjenigen auf natürlicher Basis, die aus ökologischen und bauphysikalischen Gründen immer häufiger zum Einsatz kommen, die Herstellung der Dämmstoffe technisch aufwendig ist und mit einem hohen Energieverbrauch einhergeht.

Einige der benötigten natürlichen Rohstoffe sind darüber hinaus nicht überall flächendeckend verfügbar und müssen importiert werden, z.B. kommt der Vulkangestein-Rohstoff für Perlite häufig aus Griechenland.

Darüber hinaus haben die Dämmstoffe den Nachteil, insbesondere wenn sie ein offenes Hohlraumgefüge bzw. offene Poren aufweisen, dass diese Dämmstoffe Wasser aufsaugen wie ein Schwamm und somit bei Feuchtigkeitseinwirkung ihre Dämmwirkung verlieren, sowohl in wärmetechnischer Sicht als auch schalltechnischer Sicht und insbesondere dann, wenn die Dämmstoffe natürlichen organischen Ursprunges sind auch der Verrottung unterliegen können oder eine Schimmelbildung begünstigen.

Ein Dämmstoff der eingangs genannten Art ist z.B. bekannt aus der Veröffentlichung DE 198 17 541 A1. Weiterhin werden Dämmstoffe auch angesprochen in den Veröffentlichungen WO 2012/168563 A2, GB 2 469 181 A, AU 2012 201 315 A1, WO 2015/033029 A1.

Vor diesem Hintergrund ist es eine Aufgabe der Erfindung, ein Verfahren zur Herstellung eines Dämmstoffes bereitzustellen, welches mit wenig energetischem Aufwand einen aus ökologischer Sicht bevorzugt einwandfreien Dämmstoff bereitstellt, der dauerhaft seine Dämmwirkung selbst unter Feuchteeinwirkung bewahrt und bevorzugt weiterhin verrottungssicher ist. Besonders bevorzugt soll das Ausgangsmaterial flächendeckend zur Verfügung stehen und eine gute ökobilanz haben.

Diese Aufgabe wird dadurch gelöst, dass das Ausgangsmaterial gebildet wird durch einen parenchymatisches Gewebe enthaltenden Pflanzenteil und bei der Behandlung eine Benetzung der Hohlraumwände mit Hydrophobierungsmittel unter Vermeidung einer vollständigen Füllung der Hohlräume mit Hydrophobierungsmittel erfolgt.

Die Schaumbildung erfolgt ohne dass das wässrige Bindemittel in die natürlichen Hohlräume des Ausgangsmaterials eindringt, sondern sich das Bindemittel nur um das behandelte Ausgangsmaterial herumlegt, insbesondere zumindest weitgehend. Dies wird durch die Hydrophobierung des Ausgangsmaterial erzielt, bei der auch die inneren Hohlraumwände des Ausgangsmaterials mit dem Hydrophobierungsmittel benetzt werden, so dass das wässrige Bindemittel hierdurch an einem Eindringen in diese behandelten natürlichen Hohlräume gehindert wird.

Die Erfindung sieht bevorzugt vor, dass das gebundene behandelte Ausgangsmaterial durch Verdunstung des Wassers trocknet. Dies erfolgt weiterhin bevorzugt ohne eine zusätzliche Energiezuführung.

Unter einer zusätzlichen Energiezuführung wird das Zuführen künstlich umgewandelter Energie verstanden, was die Energiebilanz des Produktes verschlechtern würde. Hingegen kann die Erfindung vorsehen, eine Trocknung unter Einwirkung von Sonnenbestrahlung vorzunehmen. Da es sich in diesem Fall um eine natürliche Energiequelle ohne vorherige Energieumwandlung handelt bleibt die gute Energiebilanz erhalten.

Erfindungsgemäß wird so ein Dämmstoff erhalten, in dem natürliche Hohlräume/Poren des pflanzlichen Ausgangsmaterials mit den durch Schaumbildung geschaffenen Poren kombiniert sind. Dadurch und durch die Verwendung Wasser-basierter Bindemittel ergibt sich insgesamt ein ökologischer Dämmstoff unter deutlich reduziertem Energieeinsatz gegenüber sonstigen Produkten des Standes der Technik.

Eine weiterhin gute Energiebilanz kann dadurch erzielt werden, dass pflanzliche Ausgangsmaterial, welches zur Hydrophobierung genutzt wird, ohne eine künstliche Vortrocknung verwendet wird, d.h. feldtrocken, so wie es geerntet wird. Allenfalls kann die Erfindung vorsehen eine Trocknung durch Lagerung, z.B. in der Sonne vorzunehmen, d.h. auch hier ohne den Einsatz umgewandelter Energie.

Die anfängliche Hydrophobierungs-Behandlung kann z.B. mit einem flüssigen oder pastösen und/oder trockenem Hydrophobierungsmittel, sowie deren Kombinationen vorgenommen werden. Eine Art der Behandlung kann z.B. ein Coating sein, wobei unter Coating insbesondere verstanden wird: tränken, tauchen, beschichten, besprühen, bedampfen, verwirbeln elektrostatisch und Flüssigkeitsaustausch.

Es kann vorgesehen sein, dass beim Trocken oder zuvor eine Reaktion zwischen dem Hydrophobierungsmittel und Bestandteilen des Ausgangsmaterials stattfindet, insbesondere chemische Bindungen zwischen dem Hydrophobierungsmittel und dem Ausgangsmaterial ggfs. unter Umwandlung des Hydrophobierungsmittels entstehen, die zur Hydrophobierung beitragen oder diese überhaupt erst bewirken. Beispielsweise können chemische Verbindungen zwischen dem Hydrophobierungsmittel und Silizium-Bestandteilen des pflanzlichen Ausgangsmaterials durch Reaktion entstehen. Insofern kann es auch vorgesehen sein, als pflanzliches Ausgangsmaterial solches mit einem Anteil von Silizium zu verwenden, insbesondere einem Silizium-Anteil größer als 0,5%.

Die Erfindung macht sich im Wesentlichen zu Nutze, dass die Natur bereits pflanzliche Ausgangsmaterialien bereitstellt, die eine Vielzahl von Hohlräumen bzw. ein Porengefüge aufweisen und deshalb grundsätzlich geeignet sind eine Isolationswirkung bereit zu stellen. Solche pflanzlichen Ausgangsmaterialien mit natürlich vorkommenden Hohlräumen, insbesondere einem Porengefüge, und insbesondere mit einem offen Hohlraum bzw. offenporigen Gefüge nehmen jedoch regelmäßig Wasser auf, ähnlich wie ein Schwamm, sodass eine im trockenen Zustand gute Isolationseigenschaft bei einem befeuchteten Zustand nicht mehr gegeben wäre und darüber hinaus das Risiko der Verrottung oder auch Schimmelbildung bestehen würde.

Die Erfindung umgeht diesen natürlich vorliegenden Nachteil erfindungsgemäß dadurch, dass das pflanzliche Ausgangsmaterial mit einem Hydrophobierungsmittel versehen, insbesondere getränkt wird, um dieses pflanzliche Ausgangsmaterial nachträglich hydrophob auszurüsten, also umgangssprachlich zu imprägnieren und hierdurch sicherzustellen, dass nach dem Trockenen das erfindungsgemäß behandelte pflanzliche Ausgangsmaterial wasserabweisend ist, dementsprechend selbst unter Wassereinwirkung das Hohlraumgefüge, insbesondere Porengefüge trocken bleibt, die Isolationswirkung des Materials somit erhalten bleibt und auch keinerlei Verrottungsgefahr oder Schimmelgefahr mehr besteht, da eine schnelle Trocknung des hydrophob ausgestatteten Ausgangsmaterials gewährleistet ist.

Als pflanzliches Ausgangsmaterial können zum Beispiel solche Pflanzen oder Pflanzenteile eingesetzt werden, in denen die natürlich vorhandenen Hohlräume oder Poren auf die in den Pflanzen natürlich realisierte Wasserleitungsfähigkeit, wie zum Beispiel in den Leitbündeln oder auf stabilisierende Gewebestrukturen zurückzuführen ist. So können zum Beispiel Rindenanteile von Pflanzen geeignet sein, um ein Ausgangsmaterial für die Erfindung zu bilden.

Es sind des Weiteren einige Pflanzen bekannt, die in ihrer Sproßachse ausgeprägte Hohlräume, das sogenannte Markparenchym aufweisen, wie beispielsweise bei einigen grasartigen oder auch krautartigen Pflanzen. Ein solches Markparenchym weist ein hohes Porenvolumen pro Gewichtseinheit auf und erweist sich im Sinne der Erfindung als besonders tauglich, um ein Dämmstoff auf pflanzlicher Basis zu bilden.

Die Erfindung sieht es daher vor, als Ausgangsmaterial solche Pflanzenteile zu verwenden die parenchymatisches Gewebe, insbesondere Mark- und/oder Rindenparenchym enthalten und besonders bevorzugt ausschließlich aus Mark- und/oder Rindenparenchym bestehen.

In besonders bevorzugter Ausführung können als Ausgangsmaterial für die erfindungsgemäßen Zwecke die Pflanzen der Gattung Miscanthus verwendet werden und insbesondere deren Parenchym, bevorzugt Markparenchym. Diese Pflanze ist umgangssprachlich auch als Chinaschilf bekannt.

Insbesondere Miscanthus ssp hat den Vorteil ein besonders hohes Hohlraumvolumen pro Gewichtseinheit, insbesondere im Markparenchym aufzuweisen. Darüber hinaus ist diese Pflanze nahezu überall anbaubar mit geringsten Anforderungen und sehr hohem Potential CO₂ zu binden, so dass bei industrieller Anwendung auch signifikant CO₂ der Atmosphäre dauerhaft entnommen werden kann und so dem Treibhauseffekt Einhalt geboten wird.

Neben dieser besonders bevorzugten Pflanzengattung können beispielsweise weiterhin auch Pflanzen der Gattung Phyllostachys oder Switchgras Verwendung finden, sowie bei den krautartigen Pflanzen beispielsweise Helianthus, Silphium oder Sida. Verwendbar sind ebenso verholzende Pflanzen, wie beispielsweise Paulownia oder Sambucus. Jeweils erweist sich besonders deren parenchymatiges Gewebe als geeignet, insbesondere deren Markparenchym.

Die Erfindung kann vorsehen, aus den mehreren Pflanzenbestandteile einer zu verwendenden Pflanze zur Bildung von Ausgangsmaterial solche mit erhöhtem Hohlraumanteil gegenüber solchen mit geringerem Hohlraumanteil zur Verwendung auszuwählen und z.B. automatisiert zu selektieren. Z.B. kann also ausdrücklich das Markparenchym einer Pflanze zur Verwendung selektiert werden. Bevorzugt werden Hohlräume umfassende Anteile ausgesucht, deren Hohlräume / Poren einen Querschnitt im Bereich von 20 nm bis 14.9 µm, bevorzugt 1.4 µm bis 14.9 µm haben.

In einer möglichen Ausgestaltung kann die Erfindung vorsehen, dass zur Erzielung unterschiedlicher Hohlraumvolumina das Ausgangsmaterial aus Pflanzenbestandteilen, bevorzugt aus Stängelanteilen und besonders bevorzugt aus Parenchym, insbesondere einer einzigen Pflanzenart ohne Selektion und ohne mechanische Vorbehandlung hinsichtlich des Hohlraumanteiles gebildet wird.

Die Erfindung kann es auch vorsehen, dass das pflanzliche Ausgangsmaterial, welches bevorzugt aus Stängelanteilen und besonders bevorzugt aus Parenchym enthaltenden oder ausschließlich daraus bestehenden Anteilen gebildet wird, vor der Durchführung einer Hydrophobierung mit einem Hydrophobierungsmittel insbesondere vor einer Tränkung mit einem solchen Mittel, zerkleinert wird, wie beispielsweise durch Häckseln oder Mahlen.

Dabei kann es vorgesehen sein, dass eine Größe des zerkleinerten Ausgangsmaterials in jeder Dimension/Richtung kleiner gleich 10 mm, bevorzugt kleiner gleich 5 mm erreicht wird.

Durch das Zerkleinern kann erfindungsgemäß auch erreicht werden, dass durch Pflanzenteile überdeckte natürliche Hohlräume/Poren aufweisende Bereiche des Ausgangsmaterials zugänglich werden, sodass zerkleinertes Ausgangsmaterial einfacher und gleichmäßiger hydrophobiert werden kann. Durch die Zerkleinerung ergibt sich auch eine verbesserte Weiterverarbeitungsmöglichkeit oder die Verwendung nur des hydrophobierten Ausgangsmaterial ohne Bindung als trockene Schüttdämmung / Einblasdämmung. Insbesondere wird dadurch ein granulares Ausgangsmaterial bereitgestellt. Besonders bevorzugt kann es vorgesehen sein, dass pflanzliches Ausgangsmaterial gewählt wird, dass insbesondere nach einer Zerkleinerung ein Hohlraumvolumen / Porenvolumen von mehr als 0,01 cm³/ Gramm bevorzugt mehr als 0,1 cm³/ Gramm und weiter bevorzugt mehr als 1 cm³/ Gramm aufweist.

Die Erfindung kann vorsehen einige der Hohlraumanteile im pflanzlichen Ausgangsmaterial durch Nutzung oder auch Entfernung der natürlich vorkommenden Zellinhalte zu vergrößern. Z.B. ist es bekannt, dass Parenchym, insbesondere junges Parenchym, Stärkeanteile in den Parenchym-Zellen aufweisen kann. Hier kann es vorgesehen sein, die vorhandene Stärke für weitere chemische Reaktionen mit entsprechenden Hydrophobierungsmitteln zu nutzen (z.B. chemische Andockung von reaktiven Substraten z.B. Silanen an die Oberfläche der vorhandenen Zellen).

Die Hydrophobierung wird derart ausgeführt, dass bei einem Coating, insbesondere einer Tränkung des Ausgangsmaterials nur eine Benetzung der Hohlraumwände / Porenwände mit dem Hydrophobierungsmittel erfolgt, nicht jedoch eine vollständige Füllung der Hohlräume / des Porenraumes mit dem Hydrophobierungsmittel. So kann verhindert werden, dass nach dem Trockenen Stoffbestandteile des Hydrophobierungsmittels das Hohlraumvolumen / Porenvolumen verschließen und nur die inneren und oder äußeren Wände der Hohlräume / Porenräume mit dem Hydrophobierungsmittel behandelt und wasserabweisend geworden sind.

Für ein Coating, insbesondere dann, wenn eine Tränkung des pflanzlichen Ausgangsmaterials mit dem Hydrophobierungsmittel erfolgen soll kann die dafür benötigte Menge an Hydrophobierungsmittel zunächst experimentell ermittelt werden zum Beispiel dadurch, dass gemessen wird, welche Menge an Hydrophobierungsmittel eine vorgegebene Menge an pflanzlichem Ausgangsmaterial maximal aufzusaugen fähig ist, um so die maximal aufgesaugte Menge pro Gewichtseinheit an Ausgangsmaterial zu ermitteln. Für die Zwecke der Hydrophobierung gemäß der Erfindung kann es sodann vorgesehen sein, eine geringere als die maximal ermittelte Menge Hydrophobierungsmittel pro Gewichtseinheit von Ausgangsmaterial zu verwenden, insbesondere weniger als die Hälfte.

Wenn ein Coaten, insbesondere eine Tränkung des pflanzlichen Ausgangsmaterials mit dem Hydrophobierungsmittel erfolgen soll kann auch die dafür benötigte Menge an Hydrophobierungsmittel berechnet werden. Grundlage der Berechnung bildet z.B. die zuvor ermittelte Oberfläche pro Volumeneinheit. Um insbesondere bei einer Tränkung des pflanzlichen Ausgangsmaterials mit dem Hydrophobierungsmittel zu gewährleisten, dass dieses sich gleichmäßig durch die kapillare Saugwirkung in dem Ausgangsmaterial verteilt kann es vorgesehen sein, dass nach dem Tränken bis zum Verfahrensschritt des Trocknen eine vorbestimmte Zeit abgewartet wird, um sicherzustellen, dass durch interne Diffusionsprozesse eine gleichmäßige Verteilung stattgefunden hat. Es findet hiernach eine Trocknung statt, die gegebenenfalls technisch unterstützt werden kann, z.B. durch Erhitzung des hydrophobierten Ausgangsmaterials oder in besonders energieeffizienter Art durch Sonnenbestrahlung.

Um insbesondere bei einer der benannten Coating-Arten der pflanzlichen Ausgangsmaterialien mit dem Hydrophobierungsmittel zu gewährleisten, dass dies sich gleichmäßig auf der Oberflächen des Ausgangsmaterial verteilen kann, ist es vorgesehen, ein entsprechendes Verfahren einzusetzen. Hierzu zählen insbesondere Coating-Verfahren wie beschichten, besprühen, benebeln, tauchen, tränken, verwirbeln, und artverwandte Verfahrenstechnologien.

Eine bevorzugte Art des Coatens kann die Beschichtung des pflanzlichen Ausgangsmaterials in einer Sprühtrommel darstellen. Diese Trommelbeschichtung sorgt insbesondere durch die spezielle Anlagentechnik für eine Reproduzierbarkeit der beabsichtigten Coatingvorgänge. Weiterhin ermöglicht dieses Verfahren spezifische Prozessanpassungen durch einen modularen Aufbau.

Es kann vorgesehen sein, ein zu einer Trommelrotation gleichzeitiges Coaten durch Sprühen oder Nebeln vorzunehmen. Hierbei wird die beabsichtigte Menge des zu coatenden Ausgangsmaterials in die Trommel verbracht und anschließend die zuvor festgelegte, z.B. berechnete Menge des favorisierten Hydrophobierungsmaterials bereitgestellt.

Die Trommel der Anlage wird in Rotationsbewegung versetzt und das Material zur Hydrophobierung durch die Düsen, die sich an der Trommel befinden, eingesprüht bzw. eingenebelt. Durch die gleichzeitige Trommelrotation in Verbindung mit der Luftverwirbelung bzw. Luftzirkulation, insbesondere durch Luftaustausch und/oder zusätzliche mögliche Temperaturzuführung ist ein gleichmäßiges Coating und Trocknen des pflanzlichen Ausgangsmaterials gewährleistet.

Dieses Verfahren ermöglicht somit eine Reproduzierbarkeit, wenn durch Ermittlung der Oberfläche / Volumeneinheit eine Berechnung der favorisierten Hydrophobierungsmittel erfolgt. Bei nicht beabsichtigter technischer Trocknung in der Rotationtrommel kann nach dem Coatingprozess eine Trocknung stattfinden z.B. durch Erwärmung des hydrophobierten Ausgangsmaterials oder in besonders energieeffizienter Art durch Sonnenbestrahlung.

Durch eine Hydrophobierung von natürliche Hohlräume / Poren umfassendem pflanzlichen Ausgangsmaterial wird erfindungsgemäß bereits ein Dämmstoff bereitgestellt, der zum Beispiel als Schüttdämmung Verwendung finden kann.

Als Hydrophobierungsmittel können beispielsweise Silane, Siloxane, für die organischen und anorganischen Verbindungen gewählt werden. Im speziellen werden hierzu Epoxisilane bzw. Aminosilane und deren chemische Abkömmlingen und artverwandte Substanzen bevorzugt. Bei rein anorganischen Mitteln werden Silikate speziell Kaliwasserglas oder Natriumwasserglas oder deren chemischen Abkömmlinge und artverwandte Substanzen bevorzugt.

Neben der erfindungsgemäßen Herstellung eines gebundenen Dämmstoffes betrifft die Offenbarung auch schon die Herstellung nur des vorangehend beschriebenen hydrophobierten Ausgangsmaterials, da dieses auch ohne eine geschäumte Bindung zur Anwendung kommen kann, z.B. wie genannt als Schüttgut- oder Einblasdämmung.

Um des Weiteren andere Anwendungsmöglichkeiten zu erschließen, wie zum Beispiel die Beschichtung von Fassadenflächen oder Wandflächen eines Gebäudes kann es auch vorgesehen sein, dass das hydrophobierte und getrocknete Ausgangsmaterial mit einem wässrigen Bindemittel zu einer fließfähigen oder pastösen, insbesondere spritzfähigen oder verputzbaren bzw. spachtelbaren Gesamtmasse gebunden wird.

Hierfür kann es beispielsweise vorgesehen sein, ein mehrkomponentiges Bindemittel einzusetzen, dessen trockene Komponente(n) nach Zugabe von Wasser fähig ist, das hydrophobierte getrocknete Ausgangsmaterial zu binden. Dies hat den Vorteil, dass bereits mit den trockenen Komponenten des Bindemittels vermischtes hydrophobiertes getrocknetes Ausgangsmaterial als Sackware baustellengerecht zur Verfügung gestellt werden kann und vor Ort lediglich mit den entsprechenden Flüssigkeiten (z.B. Wasser, Bindemittel usw.) angemischt werden muss.

Des Weiteren besteht auch die Möglichkeit direkt ein flüssiges oder pastöses Bindemittel einzusetzen, um eine manuell oder auch maschinell verarbeitbare Dämmstoffmasse zu bilden.

Aufgrund der Tatsache, dass das pflanzliche, Hohlräume / Poren aufweisende Ausgangsmaterial vor einer Vermischung mit Bindemittel hydrophobiert wurde, besteht die uneingeschränkte Möglichkeit, auch wasserbasierte Bindemittel einzusetzen, ohne dass die pflanzlichen Bestandteile hierdurch eine Schädigung erfahren. Insbesondere wird sogar erzielt, dass geringere Trocknungszeiten erreicht werden können.

Als Bindemittel können beispielsweise wässrige Kunstharzdispersionen bzw. - emulsionen, wässrige Hybriddispersionen und -emulsionen, 2-komponentige Epoxidharzsysteme, insbesondere wässrig und lösemittelfrei und hybridbasiert, 2-komponentige Polyurethansysteme, insbesondere wässrig oder lösemittelfrei oder hybridbasiert, sowie mineralische Mörtel, beispielsweise auf der Basis von Kalk und / oder Zement eingesetzt werden oder deren Kombinationen, chemische Abkömmlinge und artverwandte Substanzen und deren Varianten.

Ebenso können natürliche Bindemittel, wie zum Beispiel Lehm oder Ton Verwendung finden sowie deren Kombinationen, chemische Abkömmlinge und artverwandte Substanzen und deren Varianten. Gips kann ebenso als Bindemittel verwendet werden.

Eine erfindungsgemäße Alternative sieht vor, dass das Bindemittel vor der Vermischung mit dem hydrophobierten, getrockneten Ausgangsmaterial oder aber die aus Bindemittel und hydrophobiertem Ausgangsmaterial vermischte Gesamtmasse durch Unterhebung eines gasförmigen Fluids, wie beispielsweise von Luft zu einem Schaum gerührt/geschlagen wird.

Dies kann beispielsweise erfolgen in einer Apparatur, in welche Bindemittel und erfindungsgemäß hergestellter hydrophobierter pflanzenbasierter Dämmstoff vermischt und zur Applikation vorbereitet werden. Beispielsweise kann eine Förderpumpe oder eine Spritzeinheit zur Vermischung mit Luft zum Zweck der Schaumbildung bzw. der zusätzlichen Hohlraum-/Porenbildung ausgebildet sein.

Eine andere erfindungsgemäße Alternative sieht vor, dass dem Bindemittel vor der Vermischung mit dem hydrophobierten, getrockneten Ausgangsmaterial oder aber der vermischten Gesamtmasse ein Porenbildner zugefügt wird, insbesondere ein Gasblasen bildender Zusatz zugefügt wird, durch den beispielsweise CO₂ nach der Zufügung gebildet wird. Die Verwendung eines solchen Porenbildners und die Unterhebung von Luft zur Bildung eines Schaumes kann erfindungsgemäß auch kombiniert werden.

Insbesondere kann so ein anwendungsfertiges Dämmstoffmaterial bereitgestellt werden, dass beispielsweise spritz- oder spachtelfähig ist und nach der Applikation sich im Gesamtvolumen vergrößert also beispielsweise selbsttätig Hohlräume ausfüllt.

Der erfindungsgemäß gebildete Dämmstoff kann vor dem Abbinden des Bindemittels, insbesondere also vor dessen Aushärtung als z.B. pastöse oder spachtelbare Masse verarbeitet werden. Es kann aber auch vorgesehen sein, dass aus dem Dämmstoff geschäumte Platten ausgebildet werden, die ein weiter verarbeitbares Halbzeug bilden. Solche Platten sind bevorzugt selbsttragend, also in sich stabil.

Eine solche gebundene Dämmstoffmasse gemäß der Erfindung kann z.B. zur Isolation von Gebäuden eingesetzt werden, aber auch in jeglicher anderer Anwendung, in der eine Isolation benötigt wird.

## Patentansprüche

1. Verfahren zur Herstellung eines Dämmstoffes, bei dem ein natürliche Hohlräume umfassendes pflanzliches Ausgangsmaterial mit einem Hydrophobierungsmittel behandelt wird, hiernach das behandelte Ausgangsmaterial trocknet und das getrocknete hydrophobierte Ausgangsmaterial mit einem wässrigen Bindemittel gebunden wird wobei
a. das Bindemittel vor der Vermischung mit dem hydrophobierten, getrockneten Ausgangsmaterial oder aber die aus Bindemittel und hydrophobiertem Ausgangsmaterial vermischte Gesamtmasse durch Unterhebung eines gasförmigen Fluids zu einem Schaum gerührt/geschlagen wird und/oder
b. zur Bildung eines Schaumes dem Bindemittel vor der Vermischung mit dem hydrophobierten, getrockneten Ausgangsmaterial oder aber der vermischten Gesamtmasse ein Porenbildner zugefügt wird, insbesondere ein Gasblasen bildender Zusatz zugefügt wird,
**dadurch gekennzeichnet, dass**
c. das Ausgangsmaterial gebildet wird durch einen parenchymatisches Gewebe enthaltenden Pflanzenteil und bei der Behandlung eine Benetzung der Hohlraumwände mit Hydrophobierungsmittel unter Vermeidung einer vollständigen Füllung der Hohlräume mit Hydrophobierungsmittel erfolgt.

2. Verfahren nach Anspruch 1, **dadurch gekennzeichnet, dass** sich das Bindemittel, insbesondere zumindest weitgehend, um das behandelte Ausgangsmaterial legt ohne in dessen Hohlräume einzudringen.

3. Verfahren nach einem der vorherigen Ansprüche, **dadurch gekennzeichnet, dass** das gebundene behandelte Ausgangsmaterial durch Verdunstung des Wassers trocknet, insbesondere ohne zusätzliche Energiezuführung.

4. Verfahren nach einem der vorherigen Ansprüche, **dadurch gekennzeichnet, dass** das pflanzliche Ausgangsmaterial ohne künstliche Vortrocknung feldtrocken verarbeitet wird.

5. Verfahren nach einem der vorherigen Ansprüche, **dadurch gekennzeichnet, dass** zur Erzielung unterschiedlicher Hohlraumvolumina das Ausgangsmaterial aus Pflanzenbestandteilen, insbesondere einer einzigen Pflanzenart ohne Selektion und ohne mechanische Vorbehandlung hinsichtlich des Hohlraumanteiles gebildet wird.

6. Verfahren nach einem der vorherigen Ansprüche, **dadurch gekennzeichnet, dass** das Ausgangsmaterial vor einer Behandlung zerkleinert wird, insbesondere durch Häckseln oder Mahlen, insbesondere auf eine Größe kleiner gleich 10 mm, bevorzugt kleiner gleich 5 mm.

7. Verfahren nach einem der vorherigen Ansprüche, **dadurch gekennzeichnet, dass** zur Bildung von Ausgangsmaterial Pflanzenbestandteile, insbesondere von einer Pflanzenart selektiert werden, insbesondere von mehreren Pflanzenbestandteilen solche mit erhöhten Hohlraumanteil gegenüber solchen mit geringeren Hohlraumanteil zur Verwendung selektiert/sortiert werden.

8. Verfahren nach einem der vorherigen Ansprüche, **dadurch gekennzeichnet, dass** das Ausgangsmaterial, insbesondere nach einer Zerkleinerung, ein Hohlraumvolumen, insbesondere Porenvolumen von mehr als 1 cm³/Gramm aufweist.

9. Verfahren nach einem der vorherigen Ansprüche, **dadurch gekennzeichnet, dass** das Ausgangsmaterial ausgewählt wird aus wenigstens einer der folgenden Pflanzen:
a. einer grasartigen Pflanze, insbesondere Miscanthus ssp, Switchgras ssp, Phyllostachys spp
b. einer krautartigen Pflanze, insbesondere Helianthus spp, Silphium spp, Sida spp.
c. einer verholzenden Pflanze, insbesondere Paulownia spp., Sambucus spp.

10. Verfahren nach einem der vorherigen Ansprüche, **dadurch gekennzeichnet, dass** das Hydrophobierungsmittel ausgewählt wird aus einem der folgenden: Silane, Siloxane, Silikate oder deren chemischen Abkömmlinge und artverwandte Substanzen.

11. Verfahren nach einem der vorherigen Ansprüche, **dadurch gekennzeichnet, dass** das hydrophobierte, getrocknete Ausgangsmaterial mit dem Bindemittel auf wässriger Basis, bevorzugt flüssigen oder pastösen Bindemittel, zu einer fließfähigen oder pastösen, insbesondere spritzfähigen oder spachtelbaren Gesamtmasse gebunden wird.

12. Verfahren nach einem der vorherigen Ansprüche, **dadurch gekennzeichnet, dass** als Bindemittel wenigstens eines der folgenden eingesetzt wird:
wässrige Kunstharzdispersionen oder -emulsionen, wässrige Hybriddispersionen und -emulsionen, 2-komponentige Epoxidharzsysteme, insbesondere wässrig und/oder lösemittelfrei und/oder hybridbasiert, 2-komponentige Polyurethansysteme, insbesondere wässrig und/oder lösemittelfrei und/oder hybridbasiert, mineralische Mörtel, insbesondere auf der Basis von Kalk, Lehm, Ton, Gips und/oder Zement.

## Claims

1. Process for the production of an insulating material, where a plant-derived starting material comprising natural cavities is treated with a hydrophobizing agent, then the treated starting material is dried and the dried hydrophobized starting material is bound by an aqueous binder, where
a. the binder prior to mixing with the hydrophobized dried starting material, or else the entire mixed composition made of binder and of hydrophobized starting material, is stirred/beaten to give a foam by folding-in of a gaseous fluid, and/or
b. in order to form a foam, a pore-former, in particular an additive that forms gas bubbles, is added to the binder before mixing with the hydrophobized dried starting material, or else is added to the entire mixed composition,
**characterized in that**
c. the starting material is formed by a plant component comprising parenchymatic tissue, and during the treatment the cavity walls are wetted by hydrophobizing agent but complete filling of the cavities by hydrophobizing agent is avoided.

2. Process according to Claim 1, **characterized in that,** in particular at least to a substantial extent, the binder surrounds the treated starting material without penetration into cavities thereof.

3. Process according to either of the preceding claims, **characterized in that** the bound treated starting material is dried by evaporation of water, in particular without additional introduction of energy.

4. Process according to any of the preceding claims, **characterized in that** the plant-derived starting material is processed after drying that occurs during harvesting, without predrying by any artificial means.

5. Process according to any of the preceding claims, **characterized in that,** in order to achieve various cavity volumes, the starting material is formed from plant constituents in particular of a single plant species without selection and without mechanical pretreatment in respect of the proportion of cavities.

6. Process according to any of the preceding claims, **characterized in that** prior to a treatment the starting material is comminuted, in particular by chopping or grinding, in particular to a size smaller than or equal to 10 mm, preferably smaller than or equal to 5 mm.

7. Process according to any of the preceding claims, **characterized in that,** for the formation of starting material, plant constituents are in particular selected from one plant species, and in particular among a plurality of plant constituents those with a relatively high proportion of cavities are selected/sorted for use in preference to those with a smaller proportion of cavities.

8. Process according to any of the preceding claims, **characterized in that** the cavity volume, in particular pore volume, of the starting material, in particular after comminution, is more than 1 cm³/gram.

9. Process according to any of the preceding claims, **characterized in that** the starting material is selected from at least one of the following plants:
a. a monocot, in particular Miscanthus spp., Switchgrass spp., Phyllostachys spp.,
b. a herbaceous dicot, in particular Helianthus spp., Siliphium spp., Sida spp.,
c. a ligneous plant, in particular Paulownia spp., Sambucus spp.

10. Process according to any of the preceding claims, **characterized in that** the hydrophobizing agent is selected from one of the following: silanes, siloxanes, silicates and chemical derivatives thereof and related substances.

11. Process according to any of the preceding claims, **characterized in that** the hydrophobized, dried starting material is bound by the aqueous binder, which is preferably in liquid or paste form, to give an entire composition that is flowable or paste-like, and in particular can be applied by spraying or by a spreader tool.

12. Process according to any of the preceding claims, **characterized in that** at least one of the following is used as binder: aqueous synthetic resin dispersions or aqueous synthetic resin emulsions, aqueous hybrid dispersions and aqueous hybrid emulsions, 2-component epoxy resin systems, in particular aqueous and/or solvent-free and/or hybrid-based, 2-component polyurethane systems, in particular aqueous and/or solvent-free and/or hybrid-based, and mineral mortars, in particular based on lime, loam, clay, gypsum plaster and/or cement.

## Revendications

1. Procédé de fabrication d'un matériau isolant, selon lequel un matériau de départ végétal naturel comprenant des cavités est traité avec un agent d'hydrophobation, puis le matériau de départ traité est séché et le matériau de départ hydrophobé séché est lié avec un liant aqueux,
a. le liant avant le mélange avec le matériau de départ hydrophobé séché ou bien la masse totale mélangée du liant et du matériau de départ hydrophobé étant agité/battu en une mousse sous l'action d'un fluide gazeux, et/ou
b. pour la formation d'une mousse, un agent de formation de pores étant ajouté au liant avant le mélange avec le matériau de départ hydrophobé séché ou bien à la masse totale mélangée, notamment un additif formant des bulles de gaz,
**caractérisé en ce que**
c. le matériau de départ est formé par une partie de plante contenant un tissu parenchymatique et, lors du traitement, un mouillage des parois des cavités avec l'agent d'hydrophobation a lieu en évitant un remplissage complet des cavités avec l'agent d'hydrophobation.

2. Procédé selon la revendication 1, **caractérisé en ce que** le liant se dépose, notamment au moins en grande partie, autour du matériau de départ traité sans pénétrer dans ses cavités.

3. Procédé selon l'une quelconque des revendications précédentes, **caractérisé en ce que** le matériau de départ traité lié est séché par évaporation de l'eau, notamment sans apport d'énergie supplémentaire.

4. Procédé selon l'une quelconque des revendications précédentes, **caractérisé en ce que** le matériau de départ végétal est usiné à l'état sec du champ, sans pré-séchage artificiel.

5. Procédé selon l'une quelconque des revendications précédentes, **caractérisé en ce que,** pour obtenir différents volumes de cavités, le matériau de départ est formé à partir de constituants végétaux, notamment d'un type de plante individuel, sans sélection et sans prétraitement mécanique au regard des proportions des cavités.

6. Procédé selon l'une quelconque des revendications précédentes, **caractérisé en ce que** le matériau de départ est broyé avant un traitement, notamment par hachage ou concassage, notamment à une taille inférieure ou égale à 10 mm, de préférence inférieure ou égale à 5 mm.

7. Procédé selon l'une quelconque des revendications précédentes, **caractérisé en ce que,** pour la formation du matériau de départ, des constituants végétaux sont sélectionnés, notamment à partir d'un type de plante, des constituants ayant une proportion de cavités plus élevée étant notamment sélectionnés/triés pour l'utilisation par rapport à des constituants ayant une proportion de cavités plus faible parmi plusieurs constituants végétaux.

8. Procédé selon l'une quelconque des revendications précédentes, **caractérisé en ce que** le matériau de départ présente, notamment après un broyage, un volume de cavités, notamment un volume de pores, de plus de 1 cm³/gramme.

9. Procédé selon l'une quelconque des revendications précédentes, **caractérisé en ce que** le matériau de départ est choisi parmi au moins une des plantes suivantes :
a. une plante graminiforme, notamment Miscanthus ssp, Switchgras ssp, Phyllostachys spp,
b. une plante herbacée, notamment Helianthus spp, Silphium spp, Sida spp,
c. une plante ligneuse, notamment Paulownia spp, Sambucus spp.

10. Procédé selon l'une quelconque des revendications précédentes, **caractérisé en ce que** l'agent d'hydrophobation est choisi parmi un des suivants : les silanes, les siloxanes, les silicates ou leurs dérivés chimiques et les substances apparentées.

11. Procédé selon l'une quelconque des revendications précédentes, **caractérisé en ce que** le matériau de départ hydrophobé séché est lié avec le liant à base d'eau, de préférence un liant liquide ou pâteux, pour former une masse totale fluide ou pâteuse, notamment pulvérisable ou spatulable.

12. Procédé selon l'une quelconque des revendications précédentes, **caractérisé en ce qu'**au moins un des liants suivants est utilisé en tant que liant : des dispersions ou émulsions de résines artificielles aqueuses, des dispersions et émulsions hybrides aqueuses, des systèmes de résines époxydes bicomposants, notamment aqueux et/ou sans solvant et/ou hybrides, des systèmes de polyuréthane bicomposants, notamment aqueux et/ou sans solvant et/ou hybrides, des mortiers minéraux, notamment à base de chaux, de glaise, d'argile, de gypse et/ou de ciment.
